# EUROPÄISCHE PATENTSCHRIFT

(11) **EP 1 732 427 B1**
(45) Veröffentlichungstag und Bekanntmachung des Hinweises auf die Patenterteilung: **03.06.2009**
(21) Anmeldenummer: 05729466.2
(22) Anmeldetag: 30.03.2005
(51) Int. Cl.: A47J 43/07

(54) **HAUSHALTSGERÄT MIT ZENTRALBETÄTIGUNG**
HOUSEHOLD APPLIANCE COMPRISING A CENTRAL ACTUATING SYSTEM
APPAREIL DOMESTIQUE A COMMANDE CENTRALE

(30) Priorität: 31.03.2004 DE 102004015914
(43) Veröffentlichungstag der Anmeldung: 20.12.2006
(73) Patentinhaber: BSH Bosch und Siemens Hausgeräte GmbH, 81739 München (DE)
(72) Erfinder: MAZEJ, Stanislav, 3303 Gomilsko (SI); OGRIZEK, Darko, 3320 Velenje (SI); SEDOVSEK, Aleksander, 3330 Mozirje (SI); SEMEJA, Uros, 3327 Smartno ob Paki (SI); ZIBRET, Igor, 3327 Smartno ob Paki (SI)
(86) Internationale Anmeldenummer: PCT/EP2005/051434
(87) Internationale Veröffentlichungsnummer: WO 2005/094649

(56) Entgegenhaltungen:
- EP-A- 0 684 000
- EP-A- 1 269 898
- US-A1- 2003 075 627

## Beschreibung

Die Erfindung betrifft ein elektromotorisches Haushaltsgerät, insbesondere einen Entsafter oder eine Saftzentrifuge mit einem Betätigungselement, das zwischen einer Ruheposition und mindestens einer Betriebsposition zum Inbetriebsetzen und Anhalten eines Antriebsmotors verstellbar ist, der zum Antrieb eines Arbeitswerkzeugs vorgesehen ist, das von einem betriebsgemäß am Haushaltsgerät aufgesetzten, durch Entriegelungsmittel lösbaren Gerätedeckel abgedeckt ist.

Die US-Offenlegungsschrift US 2003/0075627 A1 offenbart ein Küchengerät, das auch als Entsafter dienen kann und das ein Gehäuse mit einem elektrischen Antrieb, eine auf das Gehäuse aufsetzbare Schüssel und einen Deckel zum Abdecken der Schüssel aufweist. Ein Drehschalter am Gehäuse zum Ein- und Ausschalten des elektrischen Antriebs kann nur dann in die "Ein"-Position bewegt werden, wenn der Deckel ordnungsgemäß auf der Schüssel angebracht ist. Ist der Drehschalter in der "Ein"-Position, ist der Deckel verriegelt und kann nicht von der Schüssel abgenommen werden. Erst durch Zurückbewegen des Drehschalters in die "Aus"-Position kann die Verriegelung gelöst werden, sodass der Benutzer den Deckel wieder abnehmen kann.
Eine ähnliche Küchenmaschine ist auch aus der Europäischen Offenlegungsschrift EP 1 269898 A1 bekannt. Auch hier wird der Deckel gleichzeitig mit dem Einschalten des Antriebs verriegelt und erst dann wieder entriegelt, wenn der Antrieb ausgeschaltet worden ist.

Aus EP 684 000 B1 ist ein Entsafter für Früchte und Gemüse bekannt, bei dem das Gehäuse zwei von außen manuell betätigbare Steuerknöpfe aufweist. Der eine Steuerknopf steuert einen Riegel, der einen Deckel für das Gehäuse in Stellung hält. Das Drehen dieses Steuerknopfes ermöglicht es, den Deckel abzunehmen. Gleichzeitig trennt er die elektrische Versorgung eines Motors auf, so dass das Gerät mit abgenommenen Deckel nicht betreibbar ist. Der zweite Steuerknopf ist ein Ein/Aus-Schalter, der die Stromzufuhr zum Motor steuert.

Nachteilig ist jedoch, dass die Handhabung der beiden Steuerknöpfe umständlich ist, bzw dass es leicht zur Verwechslung der beiden identisch ausgebildeten Steuerknöpfe kommen kann.

Aufgabe der Erfindung ist es, die Handhabung des Haushaltsgerätes zu verbessern. Insbesondere soll das Inbetriebsetzen des Haushaltsgerätes nur bei aufgesetztem Deckel in besonders sicherer Weise ermöglicht sein.

Erfindungsgemäß wird diese Aufgabe bei einem gattungsgemäßen Haushaltsgerät dadurch gelöst, dass das Betätigungselement aus der Ruheposition heraus in entgegengesetzte Richtungen entweder in die Entriegelungsposition oder die mindestens eine Betriebsposition verstellbar ist, das Betätigungselement mit dem Entriegelungsmittel verbunden ist und durch Stellen des Betätigungselements in eine Entriegelungsposition der Gerätedeckel lösbar und ein Inbetriebsetzen des Antriebsmotors verhindert ist. Durch diese Ausgestaltung kann sowohl das Entriegeln des Gerätedeckels als auch das Inbetriebsetzen des Haushaltsgerätes mit einem einzigen Betätigungselement erfolgen. Dies erleichtert die Handhabung des Haushaltsgerätes, insbesondere deshalb, weil beispielsweise nach dem Ausschalten des Haushaltsgerätes ein Umgreifen zum Lösen der Gerätedeckel-Verriegelung entfallen kann. Diese Lösung und ist für die Herstellung des Haushaltsgerätes von Vorteil, da in kostengünstiger Weise nur noch ein einziges Betätigungselement für beide Funktionen erforderlich ist.

Vorteilhafter Weise ist das Betätigungselement zum selbsttätigen Rückstellen aus der Entriegelungsposition in die Ruheposition ausgebildet.

Eine besonders sichere Handhabung des Haushaltsgerätes ist möglich, wenn das Betätigungselement aus der Ruheposition heraus in unterschiedliche Richtungen entweder in die Entriegelungsposition oder die mindestens eine Betriebsposition verstellbar ist. So sind Fehlbetätigungen durch einen Benutzer verhindert. Das Betätigungselement kann durch den Benutzer nämlich nicht in irrtümlicher Weise gleichzeitig entriegelt und betrieben werden, da das Betätigungselement nicht gleichzeitig in zwei verschiedene Richtungen verstellbar ist. Durch diese Ausführung kann in kostengünstiger Weise eine zusätzliche Sicherungseinrichtung entfallen, die beispielsweise bei zwei getrennten Betätigungselementen nötig wäre.

In einer Gestaltungsalternative kann das Betätigungselement aus der Ruheposition heraus in senkrecht zueinander stehenden Richtungen entweder in die Entriegelungsposition oder die mindestens eine Betriebsposition verstellbar sein. Beispielsweise könnte das Betätigungselement zur Einstellung der Betriebsstufen als Drehschalter ausgebildet sein, wobei eine jeweilige Winkelstellung des Betätigungselements einer Betriebsstufe entspricht. Zur Entriegelung des Gerätedeckels kann dieser Drehschalter analog eines Schaltknopfes zusätzlich eindrückbar sein. Auch diese Gestaltungsalternative unterstreicht die unterschiedlichen Funktionen von Inbetriebsetzen des Haushaltsgerätes und Entriegeln des Gerätedeckels innerhalb eines einzigen Betätigungselements.

In einer bevorzugten konstruktiven Ausgestaltung weist das Entriegelungsmittel einen im Haushaltsgerät gelagerten Schieber auf, der zum Lösen von am Gerätegehäuse und Gerätedeckel vorgesehenen Rast- und Gegenrastmittel zwischen Gerätegehäuse und Gerätedeckel einschiebbar ist.

Dabei können die Rastmittel als an der Innenseite einer Gehäusewand angeordnete, nach innen vorspringende Rastnasen ausgebildet sein. Durch die innenseitige Lage von Rastnasen und Rastausnehmungen ist die Gerätedeckel-Verriegelung vor Manipulationen von Außen geschützt, so dass die Betriebssicherheit des Haushaltsgerätes verbessert ist.

Die Gegenrastmittel sind dann als an einer Stegwand des Gehäusedeckels angeordnete Rastausnehmungen ausgebildet. Die Stegwände ragen insbesondere in das Innere des Gehäuses hinein, so dass die Rastausnehmungen im Gehäuse des Haushaltsgerätes verborgen blieben.

Jeweils zwei Rastausnehmungen können an einem durch randoffene Ausnehmungen abgegrenzten Stegwandabschnitt der Stegwand angeordnet sein. Dies erhöht die Elastizität des Stegwandabschnitts, so dass die Rastausnehmungen mit akzeptablem Kraftaufwand von den Rastnasen gelöst werden können.

Der Schieber ist dabei zwischen den zwei Rastausnehmungen des Stegwandabschnitts zwischen Gerätegehäuse und Gerätedeckel einschiebbar.

Das Betätigungselement ist vorzugsweise zum Steuern eines Drehschalters vorgesehen. Es kann mit einem Kulissenträger verbunden sein, der eine Kulisse aufweist, in die ein Zapfen eingreift, der mit dem Entriegelungsmittel verbunden ist.

In einer weiterführenden Ausbildung der Erfindung ist das Betätigungselement bei fehlendem Gerätedeckel durch Sperrmittel gegen Einschalten blockiert.

Das Sperrmittel ist vorzugsweise bei betriebsgemäß am Haushaltsgerät aufgesetztem Gerätedeckel aus einer das Betätigungselement blockierenden Stellung in eine das Betätigungselement freigebende Lage verschoben.

Das Sperrmittel kann in einer konstruktiven Variante zum Blockieren des Betätigungselements einen Zapfen umfasst, der an einem Absatz einer Kulisse eingreift, die an einem Kulissenträger vorgesehen ist, der mit dem vorzugsweise als Drehschalter ausgebildeten Betätigungselements verbunden ist.

Wie zuvor für das Entriegelungsmittel beschrieben kann das Sperrmittel als gesonderter oder identischer Schieber ausgebildet und in seiner das Betätigungselement blockierenden Stellung mittels eines Spannelements vorgespannt am Haushaltsgerät gelagert sein.

Das Spannelement ist dabei analog zum Entriegelungsmittel als eine sich einerseits am Gehäuse und andererseits an einem Vorsprung des Sperrmittels abstützende Federwendel ausgebildet.

In einer günstigen und einfachen Variante ist das Sperrmittel und das Entriegelungsmittel mit dem selben Zapfen verbunden. Insbesondere kann das Sperrmittel und das Entriegelungsmittel einteilig ausgebildet sein.

Ein bevorzugtes Ausführungsbeispiel der Erfindung ist anhand der Figuren 1 bis 6 im folgenden näher erläutert.

Es zeigen:

Figur 1 eine perspektivische Ansicht einer Saftzentrifuge, die ein erfindungsgemäßes Betätigungselement aufweist;

Figur 2 eine perspektivische Ansicht einer gebrochenen Darstellung eines Gehäuses der Saftzentrifuge aus Figur 1;

Figur 3 eine Teildraufsicht auf ein erfindungsgemäßes Entriegelungselement mit entriegeltem Gehäusedeckel;

Figur 4 eine Teilschnittansicht von Figur 3; und

Figur 5 eine Schnittansicht auf das erfindungsgemäße Entriegelungselement von Figur 2.

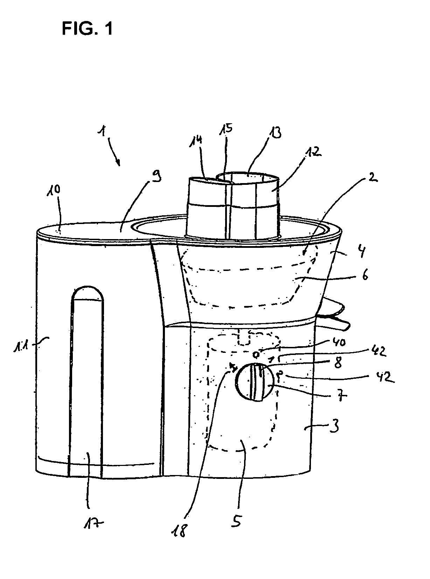

Eine in Figur 1 dargestellte Saftzentrifuge 1 weist ein Gehäuse 2 auf, das ein im wesentlichen hohlzylindrisches Unterteil 3 und ein konisch geformtes Oberteil 4 umfasst. Nur verdeckt schematisch sind ein im Unterteil 3 angeordneter Antriebsmotor 5 für ein im Oberteil 4 drehbar gelagertes Arbeitswerkzeug 6 gezeigt. Der elektrisch betreibbare Antriebsmotor 5 ist über ein drehbares Betätigungselement 7 steuerbar. Das Betätigungselement 7 ist als Drehknebel ausgebildet und an einer vorderen Seitenwand des hohlzylindrischen Unterteils 3 angebracht. In der dargestellten Drehposition des Betätigungselements 7 zeigt eine Strichmarkierung 8 die Schalterstellung "0" an, in der das Haushaltsgerät auger Betrieb gesetzt ist. In einer im Uhrzeigersinn weiter rechts gelegenen Schalterstellung "I" des Betätigungselements 7 ist die Saftzentrifuge 1 mit einer niedrigen Drehzahl angetrieben und in einer noch weiter rechts gelegenen Schalterstellung "II" des Betätigungselements 7 ist die Saftzentrifuge 1 mit einer hohen Drehzahl angetrieben. In einer im Uhrzeigesinn links von der Schalterstellung "0" gelegenen Schalterstellung "A" befindet sich das Betätigungselement 7 in einer Entriegelungsposition 18, in der ein Gerätedeckel 9 aus seiner Verriegelungsposition lösbar ist, so dass bei abgenommenen Gerätedeckel 9 das Arbeitswerkzeug 6 entnommen werden kann. Der Gerätedeckel 9 liegt auf einer Oberseite des Gehäuses 2 bündig auf und deckt auch eine obere Öffnung 10 eines Tresterbehälters 11 ab. Der Gerätedeckel 9 trägt einen Einfüllschacht 12 über den Nahrungsmittelstücke in das Gehäuse 2 auf das Arbeitswerkzeug 6 aufbringbar sind. Der Einfüllschacht 12 ist zweiteilig ausgebildet, d.h. es sind zwei Einfüllstutzen 13 und 14 vorhanden, die unterschiedliche Öffnungsquerschnitte aufweisen und die durch eine Schachtwand 15 voneinander getrennt sind. Die Einfüllstutzen 13 und 14 haben einen im wesentlichen kreisrunden bis ovalen Querschnitt, wobei der Querschnitt des Einfüllstutzens 13 größer als der Querschnitt des Einfüllstutzen 14 ausgebildet ist. Die über den Einfüllstutzen 13 oder 14 eingebrachten Nahrungsmittelstücke werden durch das Arbeitswerkzeug 6 in überwiegend feste Tresteranteile und in Saftanteile getrennt. Die Tresteranteile werden nach der Trennung im Tresterbehälter 11 gesammelt und die Saftanteile in einen Auffangbehälter 16 weitergeleitet. Der Tresterbehälter 11 weist an zwei gegenüberliegenden Behälterwänden muldenartig nach innen zurückspringende, rinnenförmige Griffbereiche 17 auf.

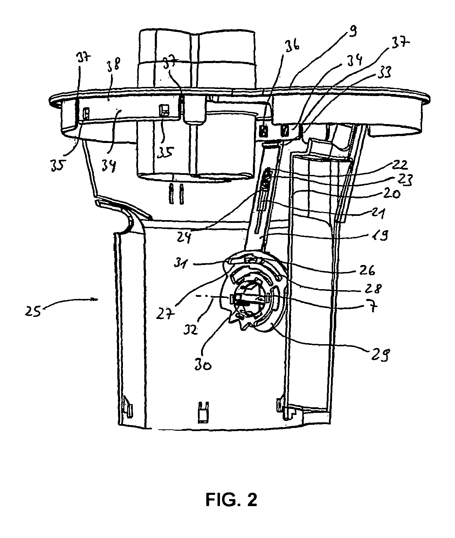

Zum Entriegeln des Gerätedeckels 9 ist, wie in Figur 2 dargestellt, ein als Schieber 19 ausgebildetes Entriegelungsmittel vorgesehen. Der Schieber 19 ist entlang einer Gehäusewand 20 des Gerätegehäuses 25 vertikal verschieblich geführt. Der Schieber 19 hat die Form eines flachen Spatels, wobei in einem mittleren Bereich eine Ausnehmung 21 eingebracht ist. An einem oberen Ende der Ausnehmung 21 ist ein Zapfen 22 angeformt, der das obere Ende einer Federwendel 23 trägt. Das untere Ende der Federwendel 23 sitz auf einem Vorsprung 24 auf, der an der Gehäusewand 20 nach innen vorspringend angeformt ist. Die Federwendel 23 spannt den Schieber 19 nach oben geringfügig gegen den Gerätedeckel 9 drückend vor. In der in Figur 2 dargestellten eingesetzten Position des Gerätedeckels 9 ist der Schieber 19 gegen die Kraft der Federwendel 23 derart gespannt, dass ein an dem Schieber 19 angeformter Zapfen 26 auf einer inneren Bahn 27 einer Kulisse 28 in einem Kulissenträger 29 ansteht. Der Kulissenträger 29 ist über Schnapprastverbindungen 30 mit dem Betätigungselement 7 drehfest verbunden. Wird das Betätigungselement 7 wie in Figur 2 dargestellt im Uhrzeigersinn in die Entriegelungsposition 18 gedreht, so gleitet der Zapfen 26 auf der inneren Bahn 27 bis zu dem in Figur 2 links dargestellten Ende 31 der Kulisse 28. Da die inneren Bahn 27 bezüglich der Drehachse 32 des Betätigungselements 7 keinen konstanten Radius aufweist, sondern in Richtung auf das Ende 31 der Kulisse 28 zunehmenden Radius aufweist, wird bei drehen des Betätigungselements 7 in die Entriegelungsposition 18 der Zapfen 26 zunehmend nach oben geschoben. Mit dem Zapfen 26 schieb sich auch der Schieber 19 nach oben, bis ein Keilabschnitt 33 des Schiebers 19 sich zwischen Gehäusewand 20 und einer Stegwand 34 des Gerätedeckels 9 schiebt. Die Stegwand 34 trägt zwei Rastausnehmungen 35 in die zwei zugeordnete Rasnasen 36 eingreifen. Die Rastnasen 36 sind an der Gehäusewand 20 nach innen vorspringend angeformt. Beim Einsetzen des Gerätedeckels 9 in das Gerätegehäuse 25 läuft die Stegwand 34 auf Schrägabschnitte der Rastnasen 36 auf und die Stegwand 34 biegt sich nach innen, bis die Rastausnehmungen 35 die Rastnasen 36 überspringen und mit diesen verrasten. Zur Verbesserung des federnden Biegens der Stegwand 34 sind jeweils zwei Rastausnehmungen 35 durch randoffene Ausnehmungen 37 auf einen Stegwandabschnitt 38 abgegrenzt, so dass die federnden Eigenschaften der Stegwandabschnitte 38 verbessert ist.

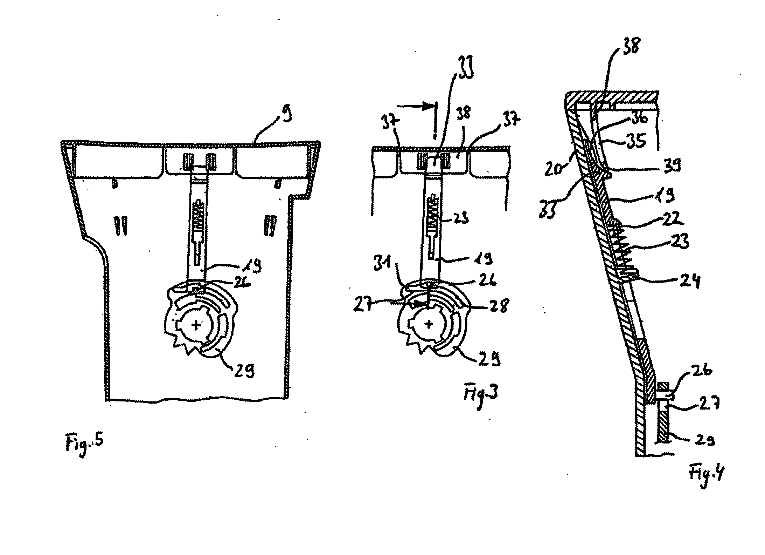

Figur 3 zeigt den Schieber 19 in einer zwischen Stegwandabschnitt 38 und Gehäusewand 20 eingeschobenen Keilabschnitt 33. Der in dieser Ansicht hinter dem Stegwandabschnitt 38 liegende Keilabschnitt 33 ist gestrichelt dargestellt. Der Kulissenträger 29 ist in die Entriegelungsposition 18 des Betätigungselements 7 gedreht dargestellt. Der Zapfen 26 des Schiebers 19 liegt an der inneren Bahn 27 der Kulisse 28 auf dem Ende 31 der Kulisse 28 an.

Figur 4 zeigt die Position des Schiebers 19 aus Figur 3 in einer Schnittdarstellung. Der Keilabschnitt 33 des Schiebers 19 ist so weit zwischen dem Stegwandabschnitt 38 und der Gehäusewand 20 eingeschoben, dass der Stegwandabschnitt 38 gemäß Figur 4 nach rechts, also in das Innere des Gehäuses aufgebogen ist. Das Aufbiegen erfolgt durch das Auflaufen einer freien Kante 39 des Stegwandabschnitts 38 auf den Keilabschnitt 33 des Schiebers 19. In der aufgebogenen Position des Stegwandabschnitts 38 geben die Rastausnehmungen 35 die Rastnasen 36 frei. An dem oberen Ende der Ausnehmung 21 ist der Zapfen 22 angeformt, der das obere Ende der Federwendel 23 trägt. Das untere Ende der Federwendel 23 sitzt auf dem Vorsprung 24 auf, der an der Gehäusewand 20 nach innen vorspringend angeformt ist. Die Federwendel 23 spannt den Schieber 19 nach oben geringfügig gegen den Gerätedeckel 9 drückend vor.

In der in Figur 5 dargestellten Position des Kulissenträgers 29 befindet sich das Betätigungselement 7 in einer Ruheposition 40 in der die Strichmarkierung 8 auf die Schalterstellung "0" zeigt (Figur 1). Die Federwendel 23 spannt den Schieber 19 nach oben vor, so dass bei abgenommenem Gerätedeckel 9 der Zapfen 26 des Schiebers 19 in einen Absatz 41 der Kulisse 28 eingreift, so dass das Betätigungselement 7 wie in Figur 5 dargestellt nicht entgegen dem Uhrzeigersinn in eine Betriebsposition 42 (Figur 1) drehbar ist.

In Figur 5 ist der Schieber 19 mit dem Kulissenträger 29 in der Ruheposition 40 gezeigt. Bei aufgesetztem Gerätedeckel 9 schiebt der Gerätedeckel 9 über den Keilabschnitt 33 des Schiebers 19 den Zapfen 26 in eine Freigabeposition, in der die Bahn der Kulisse 28 freigegeben ist, so dass das Betätigungselement 7 wahlweise in die Betriebspositionen "1" und "2", sowie in die Entriegelungsposition "A" 18 (Figur 1) drehbar ist.

## Patentansprüche

1. Elektromotorisches Haushaltsgerät, insbesondere Entsafter oder Saftzentrifuge, mit einem Betätigungselement (7), das in mindestens eine Betriebsposition (42) zum Inbetriebsetzen eines Antriebsmotors (5) verstellbar ist, der zum Antrieb eines Arbeitswerkzeugs (6) vorgesehen ist, das von einem betriebsgemäß am Haushaltsgerät aufgesetzten, durch Entriegelungsmittel (19) lösbaren Gerätedeckel (9) abgedeckt ist, wobei das Betätigungselement (7) mit dem Entriegelungsmittel (19) verbunden ist und durch Stellen des Betätigungselements (7) in eine Entriegelungsposition (18) der Gerätedeckel (9) lösbar und ein Inbetriebsetzen des Antriebsmotors (5) verhindert ist, das Betätigungselement (7) außerdem eine Ruheposition (40) zum Anhalten des Antriebsmotors (5) aufweist und aus der Ruheposition (40) heraus in unterschiedliche Richtungen entweder in die Entriegelungsposition (18) oder die mindestens eine Betriebsposition (42) verstellbar ist.

2. Haushaltsgerät nach Anspruch 1, **dadurch gekennzeichnet, dass** das Betätigungselement (7) zum selbsttätigen Rückstellen aus der Entriegelungsposition (18) in die Ruheposition (40) ausgebildet ist.

3. Haushaltsgerät nach Anspruch 1 oder 2, **dadurch gekennzeichnet, dass** das Betätigungselement (7) aus der Ruheposition (40) heraus in entgegengesetzte Richtungen entweder in die Entriegelungsposition (18) oder die mindestens eine Betriebsposition (42) verstellbar ist.

4. Haushaltsgerät nach Anspruch 1 oder 2, **dadurch gekennzeichnet, dass** das Betätigungselement (7) aus der Ruheposition (40) heraus in senkrecht zueinander stehenden Richtungen entweder in die Entriegelungsposition (18) oder die mindestens eine Betriebsposition (42) verstellbar ist.

5. Haushaltsgerät nach einem der Ansprüche 1 bis 4, **dadurch gekennzeichnet, dass** das Entriegelungsmittel (19) einen im Haushaltsgerät gelagerten Schieber aufweist, der zum Lösen von am Gerätegehäuse (25) und Gerätedeckel (9) vorgesehenen Rast- und Gegenrastmittel zwischen Gerätegehäuse (25) und Gerätedeckel (9) einschiebbar ist.

6. Haushaltsgerät nach Anspruch 5, **dadurch gekennzeichnet, dass** die Rastmittel als an der Innenseite einer Gehäusewand (20) angeordnete, nach innen vorspringende Rastnasen (36) ausgebildet sind.

7. Haushaltsgerät nach Anspruch 6, **dadurch gekennzeichnet, dass** die Gegenrastmittel als an einer Stegwand (34) des Gehäusedeckels (9) angeordnete Rastausnehmungen (35) ausgebildet sind.

8. Haushaltsgerät nach Anspruch 7, **dadurch gekennzeichnet, dass** jeweils zwei Rastausnehmungen (35) an einem durch randoffene Ausnehmungen (37) abgegrenzten Stegwandabschnitt (38) der Stegwand (34) angeordnet sind.

9. Haushaltsgerät nach Anspruch 8, **dadurch gekennzeichnet, dass** der Schieber (19) zwischen den zwei Rastausnehmungen (35) des Stegwandabschnitts (38) zwischen Gerätegehäuse (25) und Gerätedeckel (9) einschiebbar ist.

10. Haushaltsgerät nach einem der Ansprüche 1 bis 9, **dadurch gekennzeichnet, dass** das Betätigungselement (7) zum Steuern eines Drehschalters vorgesehen ist.

11. Haushaltsgerät nach Anspruch 10, **dadurch gekennzeichnet, dass** das Betätigungselement (7) mit einem Kulissenträger (29) verbunden ist, der eine Kulisse (28) aufweist, in die ein Zapfen (26) eingreift, der mit dem Entriegelungsmittel (19) verbunden ist.

12. Haushaltsgerät nach einem der Ansprüche 1 bis 11, **dadurch gekennzeichnet, dass** das Betätigungselement (7) bei fehlendem Gerätedeckel (9) durch Sperrmittel gegen Einschalten blockiert ist.

13. Haushaltsgerät nach Anspruch 12, **dadurch gekennzeichnet, dass** das Sperrmittel bei betriebsgemäß am Haushaltsgerät aufgesetztem Gerätedeckel (9) aus einer das Betätigungselement (7) blockierenden Stellung in eine das Betätigungselement (7) freigebende Lage verschoben ist.

14. Haushaltsgerät nach Anspruch 12, **dadurch gekennzeichnet, dass** das Sperrmittel zum Blockieren des Betätigungselements (7) einen Zapfen (26) umfasst, der an einem Absatz (41) einer Kulisse (28) eingreift, die an einem Kulissenträger (29) vorgesehen ist, der mit dem vorzugsweise als Drehschalter ausgebildeten Betätigungselements (7) verbunden ist.

15. Haushaltsgerät nach einem der Ansprüche 12 bis 14, **dadurch gekennzeichnet, dass** das Sperrmittel als Schieber (19) ausgebildet und in seiner das Betätigungselement (7) blockierenden Stellung mittels eines Spannelements vorgespannt am Haushaltsgerät gelagert ist.

16. Haushaltsgerät nach Anspruch 15, **dadurch gekennzeichnet, dass** das Spannelement eine sich einerseits am Gehäuse (20) und andererseits an einem Vorsprung (24) des Sperrmittels abstützende Federwendel (23) ist.

17. Haushaltsgerät nach einem der Ansprüche 12 bis 16, **dadurch gekennzeichnet, dass** das Sperrmittel und das Entriegelungsmittel mit dem selben Zapfen (26) verbunden sind.

18. Haushaltsgerät nach Anspruch 17, **dadurch gekennzeichnet, dass** das Sperrmittel und das Entriegelungsmittel einteilig ausgebildet sind.

## Claims

1. Domestic appliance driven by electric motor, particularly juice extractor or juice centrifuge, with an actuating element (7), which is adjustable into at least one operating position (42) for placing in operation a drive motor (5) provided for drive of a work tool (6), which is covered by an appliance lid (9) placed, in accordance with operation, on the domestic appliance and releasable by unlocking means (19), wherein the actuating element (7) is connected with the unlocking means (9) and through setting the actuating element (7) into an unlocking position (18) the appliance lid (9) is detachable and placing the drive motor (5) in operation is prevented, and the actuating element (7) additionally has a rest position (40) for stopping the drive motor (5) and is adjustable from the rest position (40) in different directions either into the unlocking position (18) or the at least one operating position (42).

2. Domestic appliance according to claim 1, **characterised in that** the actuating element (7) is constructed for automatic resetting from the unlocking position (18) to the rest position (40).

3. Domestic appliance according to claim 1 or 2, **characterised in that** the actuating element (7) is adjustable from the rest position (40) in opposite directions either into the unlocking position (18) or into the at least one operating position (42).

4. Domestic appliance according to claim 1 or 2, **characterised in that** the actuating element (7) is adjustable from the rest position (40) in mutually perpendicular directions either into the unlocking position (18) or into the at least one operating position (42).

5. Domestic appliance according to any one of claims 1 to 4, **characterised in that** the unlocking means (19) comprises a slide which is mounted in the domestic appliance and which can be pushed into place between appliance housing (25) and appliance lid (9) for releasing detent and counter-detent means provided at the appliance housing (25) and appliance lid (9).

6. Domestic appliance according to claim 5, **characterised in that** the detent means are constructed as inwardly protruding detent lugs (36) arranged at the inner side of a housing wall (20).

7. Domestic appliance according to claim 6, **characterised in that** the counter-detent means are constructed as detent recesses (35) arranged at a web wall (34) of the appliance lid (9).

8. Domestic appliance according to claim 7, **characterised in that** two detent recesses (35) are respectively arranged at a web wall section (38), which is bounded by recesses (37) open at the edge, of the web wall (34).

9. Domestic appliance according to claim 8, **characterised in that** the slide (19) can be pushed between the two detent recesses (35) of the web wall section (38) into place between appliance housing (25) and appliance lid (9).

10. Domestic appliance according to any one of claims 1 to 9, **characterised in that** the actuating element (7) is provided for controlling a rotary switch.

11. Domestic appliance according to claim 10, **characterised in that** the actuating element (7) is connected with a gate carrier (29) having a gate (28) in which a pin (26) connected with the unlocking means (19) engages.

12. Domestic appliance according to any one of claims 1 to 11, **characterised in that** the actuating element (7) is blocked by blocking means against switching on when the appliance lid (9) is absent.

13. Domestic appliance according to claim 12, **characterised in that** the blocking means is displaced from a setting blocking the actuating element (7) to a position freeing the actuating element (7) when placed, in accordance with operation, on the domestic appliance.

14. Domestic appliance according to claim 12, **characterised in that** the blocking means for blocking the actuating element (7) comprises a pin (26) engaging a step (41) of a gate (28) provided at a gate carrier (29), which is connected with the actuating element (7), the actuating element preferably being constructed as a rotary switch.

15. Domestic appliance according to any one of claims 12 to 14, **characterised in that** the blocking means is constructed as a slide (19) and in its setting blocking the actuating element (7) is mounted at the domestic appliance to be biased by means of a tightening element.

16. Domestic appliance according to claim 15, **characterised in that** the tightening element is a spring coil (23) supported at one end at the housing (20) and at the other end at a projection (24) of the blocking means.

17. Domestic appliance according to any one of claims 12 to 16, **characterised in that** the blocking means and unlocking means are connected by the same pin (26).

18. Domestic appliance according to claim 17, **characterised in that** the blocking means and the unlocking means are of integral construction.

## Revendications

1. Appareil ménager à électromoteur, en particulier mixeur ou centrifugeuse à jus, avec un élément de commande (7) déplaçable dans au moins une position de service (42) pour la mise en service d'un moteur d'entraînement (5) prévu pour l'entraînement d'un outil de travail (6), couvert par un couvercle d'appareil (9) amovible via un moyen de déverrouillage (19) et posé opérationnellement sur l'appareil ménager, dans lequel l'élément de commande (7) est relié au moyen de déverrouillage (19) et le couvercle d'appareil (9) est amovible par le positionnement de l'élément de commande (7) dans une position de déverrouillage (18) et une mise en service du moteur d'actionnement (5) est empêchée, l'élément de commande (7) présente en outre une position d'arrêt (40) pour l'arrêt du moteur d'entraînement (5) et est déplaçable de la position d'arrêt (40) vers différentes directions, soit dans la position de déverrouillage (18) soit dans l'au moins une position de service (42).

2. Appareil ménager selon la revendication 1, **caractérisé en ce que** l'élément de commande (7) est exécuté pour se repositionner automatiquement de la position de déverrouillage (18) dans la position d'arrêt (40).

3. Appareil ménager selon la revendication 1 ou 2, **caractérisé en ce que** l'élément de commande (7) est déplaçable de la position d'arrêt (40) dans des directions opposées, soit dans la position de déverrouillage (18) soit dans l'au moins une position de service (42).

4. Appareil ménager selon la revendication 1 ou 2, **caractérisé en ce que** l'élément de commande (7) est déplaçable de la position d'arrêt (40) dans des directions perpendiculaires l'une par rapport à l'autre, soit dans la position de déverrouillage (18) soit dans l'au moins une position de service (42).

5. Appareil ménager selon l'une des revendications 1 à 4, **caractérisé en ce que** le moyen de déverrouillage (19) présente un curseur logé dans l'appareil ménager, qui peut être actionné pour le déblocage des moyens d'enclenchement et des moyens de contre-enclenchement entre la carcasse d'appareil (25) et le couvercle d'appareil (9) prévus sur la carcasse d'appareil (25) et le couvercle d'appareil (9).

6. Appareil ménager selon la revendication 5, **caractérisé en ce que** les moyens d'enclenchement sont exécutés sous forme de butées d'enclenchement (36) saillantes vers l'intérieur disposées sur la face interne d'une paroi de carcasse (20).

7. Appareil ménager selon la revendication 6, **caractérisé en ce que** les moyens de contre-enclenchement sont exécutés sous forme de creux d'enclenchement (35) disposés sur une paroi de traverse (34) du couvercle d'appareil (9).

8. Appareil ménager selon la revendication 7, **caractérisé en ce que** deux creux d'enclenchement (35) sont respectivement disposés sur une section de paroi de traverse (38) de la paroi de traverse (34) délimitée par des creux (37) à bords ouverts.

9. Appareil ménager selon la revendication 8, **caractérisé en ce que** le curseur (19) peut être actionné entre les deux creux d'enclenchement (35) de la section de paroi de traverse (38), entre la carcasse d'appareil (25) et le couvercle d'appareil (9).

10. Appareil ménager selon l'une des revendications 1 à 9, **caractérisé en ce que** l'élément de commande (7) est prévu pour la commande d'un commutateur rotatif.

11. Appareil ménager selon la revendication 10, **caractérisé en ce que** l'élément de commande (7) est relié à un support à coulisse (29) qui présente une coulisse (28) dans laquelle s'engage un maneton (26), lequel est relié au moyen de déverrouillage (19).

12. Appareil ménager selon l'une des revendications 1 à 11, **caractérisé en ce que** l'élément de commande (7) est bloqué contre la mise en marche via un moyen de blocage en cas de couvercle d'appareil (9) manquant.

13. Appareil ménager selon la revendication 12, **caractérisé en ce que** le moyen de blocage est décalé d'un état bloquant l'élément de commande (7) à une situation libérant l'élément de commande (7) en cas de dépose opérationnelle du couvercle d'appareil (9) sur l'appareil ménager.

14. Appareil ménager selon la revendication 12, **caractérisé en ce que** le moyen de blocage pour bloquer l'élément de commande (7) comprend un maneton (26) qui s'engage dans un retrait (41) d'une coulisse (28) prévue sur un support à coulisse (29) qui est relié à l'élément de commande (7) exécuté de manière préférée sous forme de commutateur rotatif.

15. Appareil ménager selon l'une des revendications 12 à 14, **caractérisé en ce que** le moyen de blocage est exécuté sous forme de curseur (19) et est logé dans l'appareil ménager de manière précontrainte au moyen d'un élément de tension, dans son état bloquant l'élément de commande (7).

16. Appareil ménager selon la revendication 15, **caractérisé en ce que** l'élément de tension est une spirale élastique (23) qui s'appuie d'un côté contre la carcasse (20) et de l'autre côté contre une saillie (24) du moyen de blocage.

17. Appareil ménager selon l'une des revendications 12 à 16, **caractérisé en ce que** le moyen de blocage et le moyen de déverrouillage sont reliés au même maneton (26).

18. Appareil ménager selon la revendication 17, **caractérisé en ce que** le moyen de blocage et le moyen de déverrouillage sont exécutés en une seule pièce.
